# EUROPÄISCHE PATENTSCHRIFT

(11) **EP 3 221 714 B1**
(45) Veröffentlichungstag und Bekanntmachung des Hinweises auf die Patenterteilung: **07.04.2021**
(21) Anmeldenummer: 15798014.5
(22) Anmeldetag: 18.11.2015
(51) Int. Cl.: G01S 15/931, G01S 7/527, G01S 15/87, G01S 7/523

(54) **VERFAHREN ZUM ERFASSEN EINES OBJEKTS IN EINEM UMGEBUNGSBEREICH EINES KRAFTFAHRZEUGS, STEUEREINRICHTUNG, FAHRERASSISTENZSYSTEM SOWIE KRAFTFAHRZEUG**
METHOD FOR DETECTING AN OBJECT IN A SURROUNDING REGION OF A MOTOR VEHICLE, CONTROL DEVICE, DRIVER ASSISTANCE SYSTEM, AND MOTOR VEHICLE
PROCÉDÉ DE DÉTECTION D'UN OBJET DANS UNE ZONE ENVIRONNANT UN VÉHICULE AUTOMOBILE, DISPOSITIF DE COMMANDE, SYSTÈME D'AIDE À LA CONDUITE ET VÉHICULE AUTOMOBILE

(30) Priorität: 20.11.2014 DE 102014116981
(43) Veröffentlichungstag der Anmeldung: 27.09.2017
(73) Patentinhaber: Valeo Schalter und Sensoren GmbH, 74321 Bietigheim-Bissingen (DE)
(72) Erfinder: HALLEK, Michael, 74321 Bietigheim-Bissingen (DE); WALZ, Andreas, 74321 Bietigheim-Bissingen (DE); BRESSLER, Ulrich, 74321 Bietigheim-Bissingen (DE); GEIGER, Tobias, 74321 Bietigheim-Bissingen (DE)
(74) Vertreter: Enge, Sebastian
(86) Internationale Anmeldenummer: PCT/EP2015/076920
(87) Internationale Veröffentlichungsnummer: WO 2016/079163

(56) Entgegenhaltungen:
- WO-A2-02/45998
- DE-A1- 19 901 847
- DE-A1-102007 029 959
- DE-A1-102008 039 494
- DE-A1-102008 046 171
- US-A- 4 845 682

## Beschreibung

Die vorliegende Erfindung betrifft ein Verfahren zum Erfassen eines Objekts in einem Umgebungsbereich eines Kraftfahrzeugs, bei welchem während eines Messzyklus eine Mehrzahl von Ultraschallsensoren in zeitlich aufeinanderfolgenden Aktivierungsphasen betrieben werden, wobei während jeder der Aktivierungsphasen mit dem jeweiligen Ultraschallsensor eine Messung zum Bestimmen eines Abstands zwischen dem Kraftfahrzeug und dem Objekt durchgeführt wird. Die Erfindung betrifft außerdem eine Steuereinrichtung für ein Kraftfahrzeug. Ferner betrifft die vorliegende Erfindung ein Fahrerassistenzsystem für ein Kraftfahrzeug. Schließlich betrifft die vorliegende Erfindung ein Kraftfahrzeug mit einem solchen Fahrerassistenzsystem.

Das Interesse richtet sich vorliegend insbesondere auf Ultraschallsensoren für Kraftfahrzeuge. Derartige Ultraschallsensoren werden beispielsweise dazu verwendet, Objekte in dem Umgebungsbereich des Kraftfahrzeugs zu erfassen. Weiterhin kann mit den Ultraschallsensoren der Abstand zu einem Objekt bestimmt werden. Die Ultraschallsensoren umfassen üblicherweise eine Membran, die zum Aussenden eines Ultraschallsignals mit einem entsprechenden Wandler zu mechanischen Schwingungen angeregt wird. Das von dem Ultraschallsensor ausgesendete Ultraschallsignal wird von dem Objekt reflektiert und trifft wieder auf die Membran des Ultraschallsensors. In Folge des eintreffenden Ultraschallsignals wird die Membran zu mechanischen Schwingungen angeregt. Dies kann wiederum mit dem Wandler erfasst werden. Ultraschallsensoren werden heute beispielsweise in Fahrerassistenzsystemen, wie Parkhilfesystemen, verwendet. Darüber hinaus werden heutige Parkhilfesysteme, welche auf Ultraschall-Technologie basieren, in immer mehr Funktionen eingebunden, welche sich von dem klassischen Einparkvorgang abheben. Neben der funktionsübergreifenden Verwendung dieser Ultraschallsensoren, wie beispielsweise für automatische Bremsvorgänge, spielt die Objektklassifizierung eine immer wichtigere Rolle. Vor allem ist es von entscheidender Bedeutung, dass mit der steigenden Anzahl von Funktionen auch die Aktivierungszeiten der Ultraschallsensoren verlängert werden.

Mittlerweile werden die Ultraschallsensoren bereits bei geringen Geschwindigkeiten des Kraftfahrzeugs aktiviert und es werden kontinuierlich Messungen durchgeführt. Eine solche Aktivierungsstrategie der Ultraschallsensoren kann zur Folge haben, dass sich die Ultraschallsensoren von zwei oder mehreren Fahrzeugen gegenseitig negativ beeinflussen. Wenn beispielsweise zwei Fahrzeuge einen Mindestabstand zueinander unterschreiten, kann es der Fall sein, dass sich die Ultraschallsensoren der beiden Kraftfahrzeuge gegenseitig beeinflussen. Dies ist beispielsweise im Kolonnenverkehr oder in Stausituationen auftreten. Der denkbar schlimmste Fall entsteht dann, wenn sich zwei identische Fahrerassistenzsysteme bzw. Ultraschallsysteme von zwei Kraftfahrzeugen gegenseitig beeinflussen. Dies liegt insbesondere daran, dass die Sendereihenfolge der Ultraschallsensoren in den beiden Fahrzeugen synchronisiert sein kann. Dies führt dazu, dass die Funktionen der Fahrerassistenzsysteme bzw. Ultraschallsensoren beeinträchtigt werden. Zum anderen kann es der Fall sein, dass die Ultraschallsignale des anderen Kraftfahrzeugs von dem eigenen Kraftfahrzeug als Echosignale interpretiert werden und somit beispielsweise fälschlicherweise mittels eines Dauertons vor einem Objekt gewarnt wird.

In diesem Zusammenhang beschreibt die DE 10 2008 046 171 A1 ein Verfahren zur Steuerung von Sensoren, insbesondere für auf Ultraschall basierende Abstandserkennungssysteme in einem Fahrzeug, bei dem die Sensoren mit einem Signalgeber für vorgegebene Abstandsdetektionen kommunizieren. Dabei wird jeweils ein Sensor aus einer Mehrzahl von Sensoren durch ein von einem Zufallsgenerator getriggertes Signal zur Generierung eines Sendesignals veranlasst. Ferner wird aus dem von einem beabstandeten Objekt reflektierten Empfangssignal der erfasste Abstand direkt zur Ansteuerung einer Signalisierungseinrichtung verwendet.

Ferner ist aus der US 4,845,682 A ein Sensorsystem für automatisch geführte Fahrzeuge bekannt. Die automatisch geführten Fahrzeuge dienen dazu, Objekte zwischen Arbeitsstationen zu bewegen. Um eine Beeinflussung der Ultraschallsensoren der Fahrzeuge untereinander zu verhindern, ist es vorgesehen, das Aussenden eines Ultraschallsignals mit einem Zufallssignal zu variieren.

Aus der DE 10 2008 039 494 A1 ist ein Verfahren zur Kollisionsüberwachung für ein Fahrzeug bekannt, mit welchem ein Hindernis besonders schnell und präzise erkannt wird. Das Verfahren nutzt mehrere Näherungssensoren, wobei jeder Näherungssensor in einem Messzyklus ein Signal sendet und anschließend ein Echosignal empfängt. Mindestens einer der Näherungssensoren sendet bereits während eines Messzyklus eines anderen Sensors.

Die DE 10 2007 029 959 A1 offenbart ein Verfahren zur Erfassung einer Umgebung mittels durch wenigstens einen Wandler ausgesandter Trägerwellen in Form von Sendepulsen. Eine größere Messdichte wird erreicht, dass aufeinanderfolgende Sendepulse eines Wandlers oder verschiedener betriebener Wandler durch individuelle Modulation der Signale unterscheidbar sind.

Die DE 199 01 847 A1 offenbart ein Verfahren zur Erfassung von Objekten, mit Hilfe von Abstandssensoren, wobei die Abstandssensoren mit einer zeitlich veränderlichen Kennung durch einen Mikrocontroller beaufschlagbar sind.

Es ist Aufgabe der vorliegenden Erfindung, einen Weg aufzuzeigen, wie ein Objekt in einem Umgebungsbereich eines Kraftfahrzeugs mit Hilfe von Ultraschallsensoren zuverlässiger erfasst werden kann.

Diese Aufgabe wird erfindungsgemäß durch ein Verfahren, durch eine Steuereinrichtung, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Erfassen eines Objekts in einem Umgebungsbereich eines Kraftfahrzeugs. Hierbei wird während eines Messzyklus eine Mehrzahl von Ultraschallsensoren in zeitlich aufeinanderfolgenden Aktivierungsphasen betrieben, wobei während jeder der Aktivierungsphasen mit dem jeweiligen Ultraschallsensor eine Messung zum Bestimmen eines Abstands zwischen dem Kraftfahrzeug durchgeführt wird. Zudem wird während jeder der Aktivierungsphasen die Messung nach Ablauf einer jeweiligen vorgegebenen Pausenzeit durchgeführt, wobei mittels einer Steuereinrichtung ein Zufallswert bestimmt wird und die Pausenzeit für jede der Aktivierungsphasen anhand des Zufallwerts vorgegeben wird.

Vorliegend wird eine Mehrzahl von Ultraschallsensoren betrieben. Die Ultraschallsensoren können beispielsweise Teil eines Fahrerassistenzsystems eines Kraftfahrzeugs sein. Ein solches Fahrerassistenzsystem kann ein Parkhilfesystem, ein Totwinkel-Assistent und/oder ein Abstandsregeltempomat sein. Die Ultraschallsensoren können beispielsweise an und/oder in einem Stoßfänger des Kraftfahrzeugs angeordnet sein. Dabei können die Ultraschallsensoren in entsprechenden Aussparungen des Stoßfängers angeordnet werden. Alternativ dazu können die Ultraschallsensoren verdeckt hinter einem Stoßfänger des Kraftfahrzeugs angeordnet werden. Die Ultraschallsensoren dienen dazu, ein Objekt in der Umgebung des Kraftfahrzeugs zu erfassen. Insbesondere kann mit den Ultraschallsensoren ein Abstand zwischen dem Kraftfahrzeug und einem Objekt bestimmt werden. In einem Messzyklus werden die Ultraschallsensoren in zeitlich aufeinanderfolgenden Aktivierungsphasen betrieben. Das heißt die Ultraschallsensoren, die beispielsweise einem Stoßfänger des Kraftfahrzeugs zugeordnet sind, werden der Reihe nach angesteuert. Während jeder der Aktivierungsphasen wird mit demjenigen Ultraschallsensor der Mehrzahl von Ultraschallsensoren, welcher momentan in der Aktivierungsphase betrieben wird, eine Messung durchgeführt.

Bei der Messung wird insbesondere mit dem Ultraschallsensor ein Ultraschallsignal ausgesendet. Zu diesem Zweck kann eine Membran des Ultraschallsensors mit einem entsprechenden Wandler, beispielsweise einem piezoelektrischen Element, zu mechanischen Schwingungen angeregt werden. Das ausgesendete Ultraschallsignal wird von dem Objekt reflektiert und trifft wieder auf die Membran des Ultraschallsensors, welcher in Folge des reflektierten Ultraschallsignals zu mechanischen Schwingungen angeregt wird. Diese mechanischen Schwingungen der Membran können wiederum mit dem Wandler erfasst werden und beispielsweise in Form eines Spannungssignals ausgegeben werden. Anhand der Laufzeit zwischen dem Aussenden des Ultraschallsignals und dem Empfangen des reflektierten Ultraschallsignals kann der Abstand zwischen dem Ultraschallsensor und dem Objekt bestimmt werden.

Erfindungsgemäß ist es nun vorgesehen, dass während jeder der Aktivierungsphasen eine vorgegebene Pausenzeit abgewartet wird, bevor die Messung mit dem jeweiligen Ultraschallsensor gestartet wird. Wenn der jeweilige Ultraschallsensor in die Aktivierungsphase übergeführt wird, beginnt die Pausenzeit zu laufen. Nach Ablauf der vorgegebenen Pausenzeit wird mit dem Ultraschallsensor die Messung durchgeführt. Die jeweiligen Pausenzeiten während der Aktivierungsphasen werden mittels einer Steuereinrichtung vorgegeben. Die Steuereinrichtung kann beispielsweise ein elektronisches Steuergerät (Electronic Control Unit, ECU) des Kraftfahrzeugs sein. Die Steuereinrichtung bestimmt einen Zufallswert anhand dessen Pausenzeit bestimmt wird. Auf diese Weise kann eine Entsynchronisierung des Ultraschallsystems, das die Ultraschallsensoren umfasst, erreicht werden. Wenn beispielsweise zwei Kraftfahrzeuge, die ein derartiges Fahrerassistenzsystem bzw. Ultraschallsystem aufweisen, einen Mindestabstand zueinander unterschreiten, kann unterbunden werden, dass sich ein Gleichlauf im Betrieb der Ultraschallsensoren einstellt. Es kann also verhindert werden, dass die jeweiligen Ultraschallsensoren der beiden Fahrzeuge synchron in den jeweiligen Aktivierungsphasen betrieben werden und somit die Messungen synchron durchgeführt werden. Damit kann insbesondere erreicht werden, dass die Ultraschallsignale des weiteren Fahrzeugs von dem eigenen Kraftfahrzeug als Echosignale interpretiert werden. Insgesamt kann somit ein Objekt in dem Umgebungsbereich des Kraftfahrzeugs erfasst werden.

Bevorzugt wird die Pausenzeit für jede der Aktivierungsphasen vor einem Start der jeweiligen Aktivierungsphase vorgegeben. Bevor der jeweilige Ultraschallsensor der Mehrzahl von Ultraschallsensoren in die Aktivierungsphase geführt wird, kann mit der Steuereinrichtung der Zufallswert bestimmt werden und anhand des Zufallswerts die Pausenzeit vorgegeben werden. Auf diese Weise kann erreicht werden, dass die jeweiligen Pausenzeiten in den Aktivierungsphasen unterschiedlich sind. Zudem wird auch erreicht, dass Pausenzeiten in aufeinanderfolgenden Messzyklen jeweils unterschiedlich sind. Damit kann zuverlässig verhindert werden, dass bei identischen Fahrerassistenzsystemen mit Ultraschallsensoren ein Synchronlauf erfolgt.

In einer weiteren Ausführungsform werden die Pausenzeiten für jede der Aktivierungsphasen eines Messzyklus vor einem Start des Messzyklus vorgegeben. Beispielsweise können vor dem Start eines jeweiligen Messzyklus für jeden der Ultraschallsensoren der Mehrzahl von Ultraschallsensoren ein jeweiliger Zufallswert und hieraus die Pausenzeit bestimmt werden. Auf diese Weise kann erreicht werden, dass die Pausenzeiten in den jeweiligen Aktivierungsphasen unterschiedlich sind. Somit kann zuverlässig verhindert werden, dass sich Fahrerassistenzsysteme bzw. Ultraschallsysteme von zwei Fahrzeugen gegenseitig beeinflussen.

Weiterhin ist es vorteilhaft, wenn die jeweilige Messung während jeder der Aktivierungsphasen innerhalb einer vorbestimmten Messzeit durchgeführt wird, wobei die vorbestimmte Messzeit für alle Aktivierungsphasen gleich ist. Während der jeweiligen Messzeit wird also insbesondere das Ultraschallsignal ausgesendet und - falls vorhanden - das von dem Objekt reflektierte Ultraschallsignal empfangen. Dabei ist die Messzeit derart vorbestimmt, dass sie für alle Aktivierungsphasen gleich ist. Die Messzeit ist insbesondere so gewählt, dass sie die vorbestimmte Messdauer unterschreitet. Die Mindestmessdauer kann so gewählt sein, dass eine gewünschte Messreichweite mit dem jeweiligen Ultraschallsensor eingehalten wird. Zudem kann die Messzeit so gewählt sein, dass sie eine maximale Messdauer unterschreitet. Die maximale Messdauer kann insbesondere so gewählt sein, dass eine vorbestimmte Reaktionszeit des jeweiligen Ultraschallsensors gewährleistet ist. Dabei kann es auch vorgesehen sein, dass für die jeweilige Pausenzeit auch entsprechende obere und untere Grenzwerte vorgegeben werden, innerhalb welcher die Pausenzeit bestimmt werden kann. Auf diese Weise kann verhindert werden, dass die Reaktionszeit des Ultraschallsensors bzw. des Fahrerassistenzsystems durch zu lange Pausenzeiten negativ beeinflusst wird.

Bevorzugt wird der Zufallswert mit einem Zufallszahlengenerator bestimmt. Ein solcher Zufallszahlengenerator, der auch als Zufallsgenerator bezeichnet werden kann, kann beispielsweise ein sogenannter KISS-Generator sein. Dabei ist insbesondere zu beachten, dass ein Startwert, mit dem der Zufallszahlengenerator beginnt, nicht für jedes System identisch ist. Beispielsweise können für unterschiedliche Ultraschallsysteme bzw. Fahrerassistenzsysteme unterschiedliche Startwerte hinterlegt sein. Der Startwert kann auf jede der Aktivierungsphasen neu bestimmt werden. Somit kann auf zuverlässige Weise erreicht werden, dass sich die einzelnen Pausenzeiten voneinander unterscheiden.

In einer weiteren Ausführungsform wird der Zufallswert anhand eines mittels der Steuereinrichtung bestimmten Zeitstempels und/oder anhand von Daten, welche die Messungen mit den Ultraschallsensoren beschreiben, bestimmt. Um zu erreichen, dass der Startwert für die Berechnung des Zufallswerts unterschiedlich ist, kann beispielsweise ein Zeitstempel herangezogen werden. Dieser Zeitstempel kann beispielsweise anhand eines Taktgebers bzw. einer Uhr der Steuereinrichtung bestimmt werden. Alternativ oder zusätzlich können Messwerte der Ultraschallsensoren berücksichtigt werden. Beispielsweise können die Messwerte, die einen Abstand zwischen dem jeweiligen Ultraschallsensor und dem Objekt beschreiben, herangezogen werden. Dabei können die Messwerte bzw. Abstandswerte von einem oder mehreren Messzyklen herangezogen werden. Diese Messwerte bzw. Abstandswerte können auch die Laufzeit des Ultraschallsignals bzw. des Echos des Ultraschallsignals beschreiben. Ferner ist es denkbar, dass weitere Sensorinformationen, beispielsweise die Ausschwingzeit, also die zeitliche Dauer, während welcher die Membran nach Aussenden des Ultraschallsignals ausschwingt, herangezogen werden. Auf diese Weise kann der Zufallswert zuverlässig bestimmt werden.

Weiterhin ist es vorteilhaft, wenn eine Reihenfolge, entlang welcher die Ultraschallsensoren in den zeitlich aufeinanderfolgenden Aktivierungsphasen betrieben werden, zwischen aufeinanderfolgenden Messzyklen variiert wird. Beispielsweise können vier oder sechs Ultraschallsensoren vorgesehen sein, die einem Stoßfänger des Kraftfahrzeugs zugeordnet sind. Hierbei kann die Reihenfolge, entlang welcher die Ultraschallsensoren angesteuert werden, zwischen den Messzyklen variiert werden. Dabei kann die Reihenfolge immer so bestimmt werden, dass abwechselnd ein Ultraschallsensor, der einer ersten Seite des Kraftfahrzeugs, beispielsweise der linken Seite, zugeordnet ist und anschließend ein Ultraschallsensor, der einer zweiten Seite des Kraftfahrzeugs, beispielsweise der rechten Seite, zugeordnet ist, angesteuert werden. Somit kann erreicht werden, dass Objekte in dem kompletten Umgebungsbereich des Kraftfahrzeugs zuverlässig erfasst werden. Zudem kann durch die Anpassung der Reihenfolge zudem eine Beeinflussung zwischen zwei Ultraschallsystemen von verschiedenen Fahrzeugen verhindert werden.

In einer weiteren Ausgestaltung wird während der jeweiligen Messung mit dem Ultraschallsensor anhand eines von dem Ultraschallsensor empfangenen Ultraschallsignals ein Abstandswert bestimmt, wobei zum Bestimmen des Abstands zwischen dem Kraftfahrzeug und dem Objekt eine Verteilung der Abstandswerte berücksichtigt wird. Die Abstandswerte beschreiben insbesondere die Laufzeit zwischen dem Aussenden des Ultraschallsignals und dem Empfangen des reflektierten Ultraschallsignals. Zum Bestimmen des Abstands zwischen dem Kraftfahrzeug und dem Objekt kann nun die Verteilung dieser Abstandswerte untersucht werden. Wenn diese Abstandswerte eine große Streuung zueinander aufweisen, kann beispielsweise davon ausgegangen werden, dass die Abstandswerte durch das Ultraschallsignal eines Ultraschallsensors eines weiteren Kraftfahrzeugs erzeugt werden. Die Streuung der Abstandswerte entsteht durch die Variation der jeweiligen Pausenzeiten. Hat die Streuung der Abstandswerte einen vorbestimmten Schwellenwert erreicht, können diese nicht berücksichtigt bzw. herausgefiltert werden. Sie werden also insbesondere nicht zum Bestimmen des Abstands zwischen dem Kraftfahrzeug und dem Objekt herangezogen. Auf diese Weise kann der Abstand zwischen dem Kraftfahrzeug und dem Objekt zuverlässig bestimmt werden.

Eine erfindungsgemäße Steuereinrichtung für ein Kraftfahrzeug, ist zum Durchführen eines erfindungsgemäßen Verfahrens ausgelegt. Die Steuereinrichtung kann beispielsweise ein Steuergerät des Kraftfahrzeugs sein. Die Steuereinrichtung kann mit den Ultraschallsensoren zur Datenübertragung verbunden sein. Somit kann die Steuereinrichtung entsprechende Messwerte von den Ultraschallsensoren empfangen. Die Steuereinrichtung kann weiterhin dazu ausgelegt sein, einen Zufallswert zu bestimmen und aus diesem Zufallswert die jeweiligen Pausenzeiten zu berechnen. Ferner kann die Steuereinrichtung die jeweiligen Ultraschallsensoren derart ansteuern, dass diese in der Aktivierungsphase betrieben werden.

Ein erfindungsgemäßes Fahrerassistenzsystem für ein Kraftfahrzeug umfasst eine erfindungsgemäße Steuereinrichtung. Das Fahrerassistenzsystem kann zudem eine Mehrzahl von Ultraschallsensoren umfassen, die beispielsweise in einem vorderen und/oder hinteren Stoßfänger des Kraftfahrzeugs angeordnet sind. Das Fahrerassistenzsystem kann beispielsweise ein Parkhilfesystem, ein System zur Totwinkelüberwachung und/oder ein Abstandsregeltempomat sein.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Steuereinrichtung, das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale des ursprünglich formulierten unabhängigen Anspruchs aufweisen.

Die Erfindung wird nun anhand eines bevorzugten Ausführungsbeispiels sowie unter Bezugnahme auf die beigefügten Zeichnungen näher erläutert.

Dabei zeigen:
- Fig. 1: in schematischer Darstellung ein Kraftfahrzeug gemäß einer Ausführungsform der Erfindung;
- Fig. 2: einen zeitlichen Ablauf von Messzyklen eines Ultraschallsensors des Kraftfahrzeugs;
- Fig. 3: das Kraftfahrzeug und ein weiteres Kraftfahrzeug, wobei sich Erfassungsbereiche der Ultraschallsensoren der Kraftfahrzeuge überlappen;
- Fig. 4: einen zeitlichen Verlauf von Abstandswerten eines Ultraschallsensors, der nach einem Verfahren gemäß dem Stand der Technik betrieben wird; und
- Fig. 5: eine zeitliche Verteilung von Abstandswerten eines Ultraschallsensors, der nach einem erfindungsgemäßen Verfahren betrieben wird.

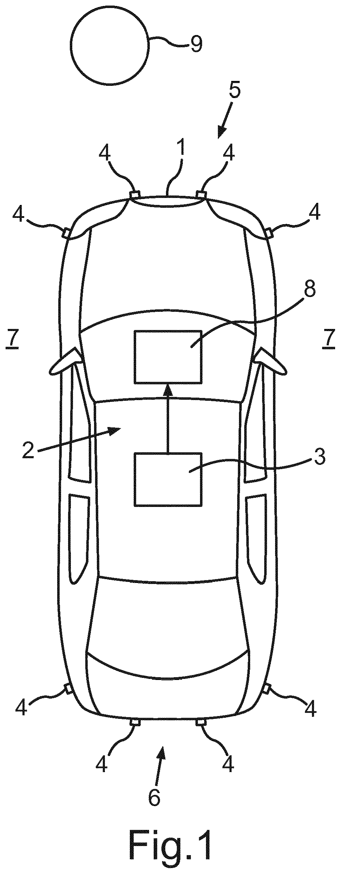

Fig. 1 zeigt ein Kraftfahrzeug 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Das Fahrerassistenzsystem 2 kann beispielsweise ein Parkassistent sein, welcher den Fahrer beim Einparken in eine Parklücke unterstützt. Beispielsweise kann das Fahrerassistenzsystem 2 dazu ausgelegt sein, eine Parklücke zu erkennen und das Kraftfahrzeug 1 zumindest semi-autonom in die erkannte Parklücke einzuparken. Das Fahrerassistenzsystem 2 kann ferner ein sogenannter Totwinkel-Assistent sein und/oder ein Abstandsregeltempomat sein.

Das Fahrerassistenzsystem 2 umfasst wiederum eine Steuereinrichtung 3. Die Steuereinrichtung 3 kann beispielsweise durch ein Steuergerät des Kraftfahrzeugs 1 gebildet sein. Des Weiteren umfasst das Fahrerassistenzsystem 2 eine Mehrzahl von Ultraschallsensoren 4. In dem vorliegenden Ausführungsbeispiel umfasst das Fahrerassistenzsystem 2 acht Ultraschallsensoren 4. Dabei sind vier Ultraschallsensoren 4 in einem Frontbereich 5 des Kraftfahrzeugs 1 und vier Ultraschallsensoren 4 in einem Heckbereich 6 des Kraftfahrzeugs 1 angeordnet. Die Ultraschallsensoren 4 sind insbesondere dazu ausgebildet, zumindest ein Objekt 9 in einem Umgebungsbereich 7 des Kraftfahrzeugs 1 zu erfassen. Des Weiteren kann mit den Ultraschallsensoren 4 ein Abstand zwischen dem Kraftfahrzeug 1 und dem Objekt 9 bestimmt werden.

Ferner umfasst das Kraftfahrzeug 1 beziehungsweise das Fahrerassistenzsystem 2 eine Ausgabeeinrichtung 8. Die Ausgabeeinrichtung 8 kann beispielsweise einen Bildschirm beziehungsweise ein Display umfassen, mit welchem dem Fahrer optisch Informationen wiedergegeben werden können. Die Ausgabeeinrichtung 8 kann alternativ oder zusätzlich einen Lautsprecher zum Ausgeben von akustischen Signalen umfassen. Ferner kann die Ausgabeeinrichtung 8 dazu ausgebildet sein, eine haptische Rückmeldung an den Fahrer auszugeben. Die Ausgabeeinrichtung 8 ist mit einer entsprechenden Datenleitung mit der Steuereinrichtung 3 zur Datenübertragung verbunden. Ferner sind die Ultraschallsensoren 4 zur Datenübertragung mit der Steuereinrichtung 3 verbunden. Entsprechende Datenleitungen sind vorliegend der Übersichtlichkeit halber nicht gezeigt.

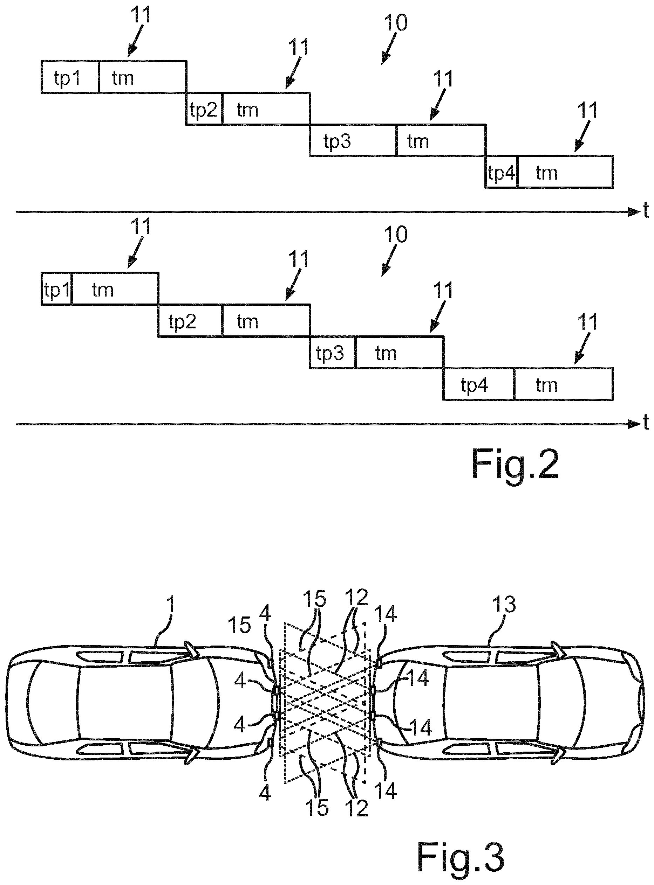

Um das Objekt 9 in dem Umgebungsbereich 7 des Kraftfahrzeugs 1 zu erfassen, werden die Ultraschallsensoren 4 in einem jeweiligen Messzyklus 10 betrieben. Beispielsweise werden die Ultraschallsensoren 4, die dem Frontbereich 5 zugeordnet sind und die Ultraschallsensoren 4, die dem Heckbereich 6 zugeordnet sind, in separaten Messzyklen 10 betrieben. Fig. 2 zeigt beispielhaft den zeitlichen Ablauf von zwei aufeinanderfolgenden Messzyklen, die beispielsweise mit vier Ultraschallsensoren 4 durchgeführt werden, die in dem Frontbereich 5 angeordnet sind. Die vier Ultraschallsensoren 4 werden in zeitlich aufeinanderfolgenden Aktivierungsphasen 11 betrieben. Zunächst wird ein erster der Ultraschallsensoren 4, dann ein zweiter der Ultraschallsensoren 4, anschließend ein dritter der Ultraschallsensoren 4 und schließlich ein vierter der Ultraschallsensor 4 in einer jeweiligen Aktivierungsphase 11 betrieben.

Während jeder der Aktivierungsphasen 11 erfolgt eine Messung mit dem jeweiligen Ultraschallsensor 4. Während der Messung wird mit dem Ultraschallsensor 4 ein Ultraschallsignal ausgesendet und falls vorhanden das von dem Objekt 9 reflektierte Ultraschallsignal wieder empfangen. Anhand der Laufzeit zwischen dem Aussenden des Ultraschallsignals und dem Empfangen des von dem Objekt 9 reflektierten Ultraschallsignal kann ein Abstandswert a bestimmt werden, der den Abstand zwischen dem jeweiligen Ultraschallsensor 4 und dem Objekt 9 beschreibt. Die Messung mit den jeweiligen Ultraschallsensoren 4 wird während einer Messzeit tm durchgeführt. Die Messzeit tm ist in dem vorliegenden Ausführungsbeispiel so gewählt, dass sie für alle Aktivierungsphasen 11 gleich ist.

Zudem ist in jeder der Aktivierungsphasen eine Pausenzeit tp1, tp2, tp3, tp4 vorgesehen. Diese Pausenzeiten tp1 bis tp4 werden jeweils anhand eines Zufallswerts mittels der Steuereinrichtung 3 bestimmt. Der Zufallswert kann beispielsweise mit Hilfe eines Zufallszahlengenerators bestimmt werden. Somit wird erreicht, dass die Pausenzeit tp1 bis tp4 in den jeweiligen Aktivierungsphasen 11 unterschiedlich sind. Zudem kann erreicht werden, dass die jeweiligen Pausenzeiten tp1 bis tp4 in aufeinanderfolgenden Messzyklen, die in Fig. 2 untereinander dargestellt sind, unterschiedlich sind. Somit kann erreicht werden, dass Fahrerassistenzsysteme 2 von zwei Kraftfahrzeugen 1, 13 synchron betrieben werden und sich somit gegenseitig beeinflussen.

Dies ist beispielhaft in Fig. 3 dargestellt. Hier ist das Kraftfahrzeug gemäß Fig. 1 dargestellt, wobei zudem die jeweiligen Erfassungsbereiche 12 der Ultraschallsensoren 4 in dem Frontbereich 5 dargestellt sind. In diesem Ausführungsbeispiel befindet sich ein weiteres Kraftfahrzeug 13 so nahe an dem Kraftfahrzeug 1, dass sich die Erfassungsbereiche 15 der Ultraschallsensoren 14 des weiteren Kraftfahrzeugs 13 mit den Erfassungsbereichen 12 der Ultraschallsensoren 4 des Kraftfahrzeugs 12 überlagern. Eine derartige Konstellation bzw. ein derart geringer Abstand zwischen dem Kraftfahrzeug 1 und dem weiteren Kraftfahrzeug 13 ergibt sich beispielsweise während einer Kolonnenfahrt im Stau.

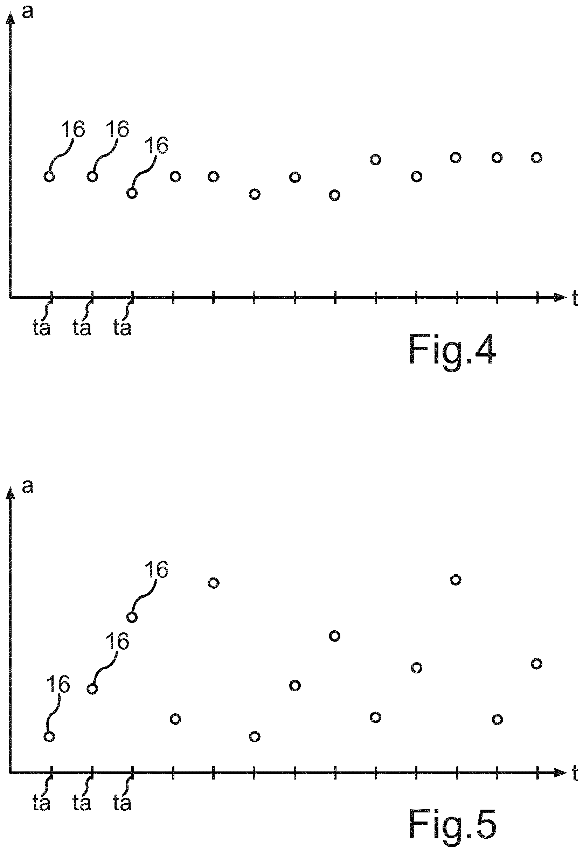

Fig. 4 zeigt eine Mehrzahl von Abstandswerten 16 in Abhängigkeit von der Zeit t. Die Abstandwerte 16 beschreiben den Abstand a zwischen dem Ultraschallsensor 4 und dem Objekt 9. Dabei ist für vorbestimmte Messzeitpunkte ta jeweils ein Abstandswert 16 aufgetragen. Fig. 4 zeigt einen zeitlichen Verlauf der Abstandswerte 16 bei einer Konstellation gemäß Fig. 3, bei der sich also die Erfassungsbereiche 12 und 15 der Kraftfahrzeuge 1 und 13 überlagern, wobei die Ultraschallsensoren 4 und 14 synchron betrieben werden. Durch den synchronen Betrieb der Fahrerassistenzsysteme 2 der beiden Kraftfahrzeuge 1 und 13 werden beispielsweise von den Ultraschallsensoren 4 des Kraftfahrzeugs 1 die Ultraschallsignale des weiteren Kraftfahrzeugs 13 als Echosignale interpretiert. Somit kann beispielsweise fälschlicherweise das Objekt 9 in dem Umgebungsbereich 7 des Kraftfahrzeugs 1 erkannt werden.

Im Vergleich hierzu zeigt Fig. 5 den zeitlichen Verlauf der Abstandswerte 16 wenn das Fahrerassistenzsystem 2 des Kraftfahrzeugs gemäß einem erfindungsgemäßen Verfahren betrieben wird. Hierbei kann es auch vorgesehen sein, dass das Fahrerassistenzsystem des weiteren Kraftfahrzeugs 13 ebenfalls gemäß diesem Verfahren betrieben wird. Durch die Variation der Pausenzeiten tp1 bis tp4 weisen die Abstandswerte, die von den Ultraschallsignalen der Ultraschallsensoren 12 des weiteren Kraftfahrzeugs 13 stammen, eine deutliche Streuung auf. In diesem Fall können Abstandswerte 16 die bezüglich des Abstands a eine deutliche Streuung aufweisen, bei dem Bestimmen des Abstands zwischen dem Kraftfahrzeug 1 und dem Objekt 9 nicht berücksichtigt werden bzw. herausgefiltert werden. Auf diese Weise kann der Abstand zwischen dem Kraftfahrzeug 1 und dem Objekt 9 zuverlässig erfasst werden.

## Patentansprüche

1. Verfahren zum Erfassen eines Objekts (9) in einem Umgebungsbereich (7) eines Kraftfahrzeugs (1), bei welchem während eines Messzyklus (10) eine Mehrzahl von Ultraschallsensoren (4) in zeitlich aufeinanderfolgenden Aktivierungsphasen (11) betrieben werden, wobei während jeder der Aktivierungsphasen (11) mit dem jeweiligen Ultraschallsensor (4) eine Messung zum Bestimmen eines Abstands zwischen dem Kraftfahrzeug (1) und dem Objekt (9) durchgeführt wird,
wobei während jeder der Aktivierungsphasen (11) die Messung nach Ablauf einer jeweiligen vorgegebenen Pausenzeit (tp1, tp2, tp3, tp4) durchgeführt wird, **dadurch gekennzeichnet, dass** mittels einer Steuereinrichtung (3) ein Zufallswert bestimmt wird, wobei die Steuereinrichtung (3) mit den Ultraschallsensoren (4) zur Datenübertragung verbunden ist, wobei die Steuereinrichtung (3) entsprechende Messwerte von den Ultraschallsensoren empfängt, und dass mittels der Steuereinrichtung (3) die Pausenzeit (tp1, tp2, tp3, tp4) für jede der Aktivierungsphasen (11) anhand des Zufallswerts vorgegeben wird, wobei die Pausenzeiten (tp1, tp2, tp3, tp4) in den jeweiligen Aktivierungsphasen (11) während eines Messzyklus (10) unterschiedlich sind und die Pausenzeiten (tp1, tp2, tp3, tp4) in aufeinanderfolgenden Messzyklen (10) jeweils unterschiedlich sind.

2. Verfahren nach Anspruch 1,
**dadurch gekennzeichnet, dass**
die Pausenzeit (tp1, tp2, tp3, tp4) für jede der Aktivierungsphasen (11) vor einem Start der jeweiligen Aktivierungsphase (11) vorgegeben werden.

3. Verfahren nach Anspruch 1 oder 2,
**dadurch gekennzeichnet, dass**
die Pausenzeiten (tp1, tp2, tp3, tp4) für jede der Aktivierungsphasen (11) eines Messzyklus (10) vor einem Start des Messzyklus (10) vorgegeben werden.

4. Verfahren nach einem der vorhergehenden Ansprüche,
**dadurch gekennzeichnet, dass**
die jeweilige Messung während jeder der Aktivierungsphasen (11) innerhalb einer vorbestimmten Messzeit (tm) durchgeführt wird, wobei die vorbestimmte Messzeit (tm) für alle Aktivierungsphasen (11) gleich sind.

5. Verfahren nach einem der vorhergehenden Ansprüche,
**dadurch gekennzeichnet, dass**
der Zufallswert mit einem Zufallszahlengenerator bestimmt wird.

6. Verfahren nach einem der vorhergehenden Ansprüche,
**dadurch gekennzeichnet, dass**
der Zufallswert anhand eines mittels der Steuereinrichtung (3) bestimmten Zeitstempels und/oder anhand von Daten, welche die Messungen mit den Ultraschallsensoren (4) beschreiben, bestimmt wird.

7. Verfahren nach einem der vorhergehenden Ansprüche,
**dadurch gekennzeichnet, dass**
eine Reihenfolge, entlang welcher die Ultraschallsensoren (4) in den zeitlich aufeinanderfolgenden Aktivierungsphasen (11) betrieben werden, zwischen aufeinanderfolgenden Messzyklen (10) variiert wird.

8. Verfahren nach einem der vorhergehenden Ansprüche,
**dadurch gekennzeichnet, dass**
während der jeweiligen Messung mit dem Ultraschallsensor (4) anhand eines empfangenen Ultraschallsignals ein Abstandswert (16) bestimmt wird, wobei eine Mehrzahl von Abstandswerten (16) in Abhängigkeit von der Zeit (t) bestimmt werden, wobei zum Bestimmen des Abstands zwischen dem Kraftfahrzeug (1) und dem Objekt (9) eine Verteilung der Abstandswerte (16) berücksichtigt wird.

9. Steuereinrichtung (3) für ein Kraftfahrzeug (1), welche zum Durchführen eines Verfahrens nach einem der vorhergehenden Ansprüche ausgelegt ist.

10. Fahrerassistenzsystem (2) für ein Kraftfahrzeug (1) mit einer Steuereinrichtung (3) nach Anspruch 9.

11. Kraftfahrzeug (1) mit einem Fahrerassistenzsystem (2) nach Anspruch 10.

## Claims

1. Method for detecting an object (9) in an area (7) surrounding a motor vehicle (1), in which during a measuring cycle (10) a multiplicity of ultrasonic sensors (4) are operated in chronologically successive activation phases (11), a measurement for determining a distance between the motor vehicle (1) and the object (9) is carried out with the respective ultrasonic sensor (4) during each of the activation phases (11), wherein during each of the activation phases (11) the measurement is carried out after expiry of a respective predefined pause time (tpl, tp2, tp3, tp4), **characterized in that** a random value is determined by means of a control device (3), wherein the control device (3) is connected to the ultrasonic sensors (4) for the transmission of data, wherein the control device (3) receives corresponding measured values from the ultrasonic sensors, and **in that** the pause time (tpl, tp2, tp3, tp4) for each of the activation phases (11) is predefined by means of the control device (3) on the basis of the random value, wherein the pause times (tpl, tp2, tp3, tp4) are different in the respective activation phases (11) during a measuring cycle (10), and the pause times (tpl, tp2, tp3, tp4) are respectively different in successive measuring cycles (10).

2. Method according to Claim 1,
**characterized in that**
the pause time (tpl, tp2, tp3, tp4) for each of the activation phases (11) is predefined before a start of the respective activation phase (11).

3. Method according to Claim 1 or 2,
**characterized in that**
the pause times (tpl, tp2, tp3, tp4) for each of the activation phases (11) of a measuring cycle (10) are predefined before a start of the measuring cycle (10) .

4. Method according to one of the preceding claims, **characterized in that**
the respective measurement during each of the activation phases (11) is carried out within a predetermined measuring time (tm), wherein the predetermined measuring time (tm) is the same for all the activation phases (11).

5. Method according to one of the preceding claims, **characterized in that**
the random value is determined with a random value generator.

6. Method according to one of the preceding claims, **characterized in that**
the random value is determined on the basis of a timestamp which is determined by means of the control device (3) and/or said random value is determined on the basis of data which describes the measurements with the ultrasonic sensors (4).

7. Method according to one of the preceding claims, **characterized in that**
a sequence along which the ultrasonic sensors (4) are operated in the chronologically successive activation phases (11) is varied between successive measuring cycles (10).

8. Method according to one of the preceding claims, **characterized in that**
during the respective measurement a distance value (16) is determined with the ultrasonic sensor (4) on the basis of a received ultrasonic signal, wherein a multiplicity of distance values (16) are determined as a function of the time (t) wherein a distribution of distance values (16) is taken into account in order to determine the distance between the motor vehicle (1) and the object (9).

9. Control device (3) for a motor vehicle (1), which device is configured to carry out a method according to one of the preceding claims.

10. Driver assistance system (2) for a motor vehicle (1) having a control device (3) according to Claim 9.

11. Motor vehicle (1) having a driver assistance system (2) according to Claim 10.

## Revendications

1. Procédé de détection d'un objet (9) dans une zone environnante (7) d'un véhicule automobile (1), selon lequel plusieurs capteurs à ultrasons (4) sont mis en fonctionnement pendant un cycle de mesure (10) dans des phases d'activation (11) qui se succèdent dans le temps, dans lequel, pendant chacune des phases d'activation (11), une mesure est effectuée avec le capteur à ultrasons (4) respectif pour déterminer une distance entre le véhicule automobile (1) et l'objet (9),
dans lequel la mesure est effectuée pendant chacune des phases d'activation (11) après l'expiration d'un temps de pause prédéterminé (tpl, tp2, tp3, tp4) respectif, **caractérisé en ce qu'**une valeur aléatoire est déterminée au moyen d'un dispositif de commande (3), dans lequel le dispositif de commande (3) est relié aux capteurs à ultrasons (4) à des fins de transmission de données, dans lequel le dispositif de commande (3) reçoit des valeurs de mesure correspondantes en provenance des capteurs à ultrasons, et **en ce que** le temps de pause (tpl, tp2, tp3, tp4) est prédéterminé au moyen du dispositif de commande (3) pour chacune des phases d'activation (11) sur la base de la valeur aléatoire, dans lequel les temps de pause (tpl, tp2, tp3, tp4) sont différents dans les phases d'activation respectives (11) pendant un cycle de mesure (10) et les temps de pause (tpl, tp2, tp3, tp4) sont respectivement différents dans des cycles de mesure successifs (10).

2. Procédé selon la revendication 1,
**caractérisé en ce que** les temps de pause (tpl, tp2, tp3, tp4) sont prédéterminés pour chacune des phases d'activation (11) avant un début de la phase d'activation (11) respective.

3. Procédé selon la revendication 1 ou 2,
**caractérisé en ce que** les temps de pause (tpl, tp2, tp3, tp4) sont prédéterminés pour chacune des phases d'activation (11) d'un cycle de mesure (10) avant un début du cycle de mesure (10).

4. Procédé selon l'une des revendications précédentes, **caractérisé en ce que**, pendant chacune des phases d'activation (11), la mesure respective est effectuée au cours d'un temps de mesure prédéterminé (tm), dans lequel le temps de mesure prédéterminé (tm) est identique pour toutes les phases d'activation (11).

5. Procédé selon l'une des revendications précédentes, **caractérisé en ce que** la valeur aléatoire est déterminée à l'aide d'un générateur de nombres aléatoires.

6. Procédé selon l'une des revendications précédentes, **caractérisé en ce que** la valeur aléatoire est déterminée sur la base d'un marqueur temporel déterminé au moyen du dispositif de commande (3) et/ou sur la base de données qui décrivent les mesures effectuées avec les capteurs à ultrasons (4).

7. Procédé selon l'une des revendications précédentes, **caractérisé en ce qu'**une séquence de fonctionnement suivant laquelle les capteurs à ultrasons (4) sont mis en fonctionnement au cours des phases d'activation (11) qui se succèdent dans le temps est amenée à varier entre des cycles de mesure (10) successifs.

8. Procédé selon l'une des revendications précédentes, **caractérisé en ce que**, pendant la mesure respective effectuée avec le capteur à ultrasons (4), une valeur de distance (16) est déterminée sur la base d'un signal ultrasonore reçu, dans lequel une pluralité de valeurs de distance (16) sont déterminées en fonction du temps (t), dans lequel une distribution des valeurs de distance (16) est prise en compte pour déterminer la distance entre le véhicule automobile (1) et l'objet (9).

9. Dispositif de commande (3) destiné à un véhicule automobile (1), qui est conçu pour mettre en œuvre un procédé selon l'une des revendications précédentes.

10. Système d'aide à la conduite (2) destiné à un véhicule automobile (1) comprenant un dispositif de commande (3) selon la revendication 9.

11. Véhicule automobile (1) comprenant un système d'aide à la conduite (2) selon la revendication 10.
